(19) Europäisches Patentamt

European Patent Office

Office européen des brevets

(11) **EP 4 773 541 A1**

(12) **EUROPEAN PATENT APPLICATION**

(43) Date of publication:
**08.07.2026  Bulletin 2026/28**

(21) Application number: **25220766.7**

(22) Date of filing: **04.12.2025**

(51) International Patent Classification (IPC):
**H04L 9/00** *(2022.01)*     **G06F 21/57** *(2013.01)*
**G06N 10/60** *(2022.01)*

(52) Cooperative Patent Classification (CPC):
**H04L 9/002; G06F 21/577; G06N 10/00;
G06N 10/60; G06N 10/80;** H04L 2209/26

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  **02.01.2025  IN 202521000475**

(71) Applicant: **Tata Consultancy Services Limited
Mumbai, Maharashtra 400 021 (IN)**

(72) Inventors:
• **SHANKAR, Shiv
  560066 Bangalore, Karnataka (IN)**
• **ALASINGARA BHATTACHAR, Rajan Mindigal
  560066 Bangalore, Karnataka (IN)**
• **BHOWMICK, Amit
  110001 New Delhi, Delhi (IN)**
• **SINGH DILIP THAKUR, Meena
  560009 Bangalore, Karnataka (IN)**

(74) Representative: **Goddar, Heinz J.
Boehmert & Boehmert
Anwaltspartnerschaft mbB
Pettenkoferstrasse 22
80336 München (DE)**

(54) **METHOD AND SYSTEM TO ESTIMATE RISK FOR A SOFTWARE APPLICATION DUE TO QUANTUM THREAT**

(57)     Conventional risk estimation techniques perform dynamic analysis of application or use models which require training data. Present disclosure provides method and system to estimate risk for a software application due to quantum threat by static analysis. A set of records pertaining to the application is received and parsed to obtain application, crypto and platform parameters. In addition, list of quantum vulnerable algorithms, number of Qubits required to break a cryptographic algorithm used by the application and a current Qubit number are also received. Then, value of Quantum Day is determined based on the current Qubit number and the number of Qubits required to break the cryptographic algorithm used by the application. Further, SOD (Severity, Occurrence, Detection) scores are calculated for each parameter, and they are multiplied to determine Risk Priority Number (RPN) for each parameter. Finally, RPNs of all parameters are summed up to estimate overall risk of the application.

FIG. 3

EP 4 773 541 A1

**Description**

CROSS-REFERENCE TO RELATED APPLICATIONS AND PRIORITY

The present application claims priority to Indian application no. 202521000475, filed on January 02, 2025.

TECHNICAL FIELD

The present invention generally relates to the field of risk assessment, and, more particularly, to a method and system to estimate risk for a software application due to quantum threat.

BACKGROUND

Quantum computing has advanced as a fully-fledged technology, increasing its computing capability with increasing number of qubits in the present decade. After the full-fledged quantum computer implementation, quantum computing can be used for attacking or breaking the underlying security of software applications. With the quantum threat looming in, there is an imminent need to assess security of current software applications in an enterprise and perform course correction by eliminating the quantum vulnerable schemes and replacing it with quantum safe ones. Quantum risk analysis for an application involves analyzing the source code, third party applications, platform on which it is hosted, risk policies of the organization and various other parameters related to the application and environment. Based on the risk value, the enterprise/organization takes a call for migrating the entire crypto stack from the conventional crypto version to post quantum secure version of the algorithms. Existing techniques that assess risk for an application, such as STRIDE model (Spoofing, Tampering, Repudiation, Information disclosure, Denial of service, Elevation of privilege), consider a threat model for the application and essentially does the dynamic analysis of the system. Dynamic analysis considers parameters of a working application, i.e. the parameters are captured when the application is running, for risk estimation. It is challenging and sometimes impossible to correct faults if they are detected after the system is implemented and working. One of the recent works (Indian Patent Application No 202321067239) discloses an approach to predict the risk of the application using a pre trained model developed using cox approach from the survival analysis in medical field. The training data is given to the cox model to produce model parameters for predicting risk of the application as compared to growth of the qubits. However, the prior art relies on quality of the data of the enterprise given during the training time and also needs lot of time for training the model.

SUMMARY

Embodiments of the present disclosure present technological improvements as solutions to one or more of the above-mentioned technical problems recognized by the inventors in conventional systems. For example, in one embodiment, a method to estimate risk for a software application due to quantum threat is provided. The method includes receiving a plurality of records associated with an application and a plurality of quantum parameters. The plurality of quantum parameters comprise a list of quantum vulnerable algorithms, a number of Qubits required to break a cryptographic algorithm used by the application and a current Qubit number. Further, the method includes parsing the plurality of records to obtain a plurality of parameters comprising application parameters, crypto parameters and platform parameters and determining value of Quantum Day based on the current Qubit number and the number of Qubits required to break the cryptographic algorithm used by the application. The method further includes computing a severity score ($s\_score$), an occurrence score ($o\_score$) and a detection score ($d\_score$) for each of the plurality of parameters based on the value of Quantum Day and determining a risk priority number associated with each of the plurality of parameters by multiplying respective severity score, occurrence score and detection score. Furthermore, the method includes estimating an overall risk of the application by summing up the risk priority numbers associated with the plurality of parameters.

In another aspect, a system to estimate risk for a software application due to quantum threat is provided. The system includes: a memory storing instructions; one or more communication interfaces; and one or more hardware processors coupled to the memory via the one or more communication interfaces, wherein the one or more hardware processors are configured by the instructions to receive a plurality of records associated with an application and a plurality of quantum parameters. The plurality of quantum parameters comprise a list of quantum vulnerable algorithms, a number of Qubits required to break a cryptographic algorithm used by the application and a current Qubit number. Further, the one or more hardware processors are configured by the instructions to parse the plurality of records to obtain a plurality of parameters comprising application parameters, crypto parameters and platform parameters and determine value of Quantum Day based on the current Qubit number and the number of Qubits required to break the cryptographic algorithm used by the application. The one or more hardware processors are further configured by the instructions to compute a severity score ($s\_score$), an occurrence score ($o\_score$) and a detection score ($d\_score$) for each of the plurality of parameters based on the value of Quantum Day and determine a risk priority number associated with each of the plurality of parameters by multiplying respective severity score, occurrence score and detection score. Furthermore, the one or more hardware processors are configured by the instructions to estimate an overall risk of the application by summing up the risk priority numbers associated with the plurality of parameters.

In yet another aspect, there are provided one or more non-transitory machine-readable information storage mediums comprising one or more instructions which when executed by one or more hardware processors cause a method to estimate risk for a software application due to quantum threat. The method includes receiving a plurality of records associated with an application and a plurality of quantum parameters. The plurality of quantum parameters comprise a list of quantum vulnerable algorithms, a number of Qubits required to break a cryptographic algorithm used by the application and a current Qubit number. Further, the method includes parsing the plurality of records to obtain a plurality of parameters comprising application parameters, crypto parameters and platform parameters and determining value of Quantum Day based on the current Qubit number and the number of Qubits required to break the cryptographic algorithm used by the application. The method further includes computing a severity score ($s\_score$), an occurrence score ($o\_score$) and a detection score ($d\_score$) for each of the plurality of parameters based on the value of Quantum Day and determining a risk priority number associated with each of the plurality of parameters by multiplying respective severity score, occurrence score and detection score. Furthermore, the method includes estimating an overall risk of the application by summing up the risk priority numbers associated with the plurality of parameters.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system to estimate risk for a software application due to quantum threat, according to some embodiments of the present disclosure.
FIG. 2 is a pipeline for Post Quantum Cryptography (PQC) migration of an application executed by the system of FIG. 1, according to some embodiments of the present disclosure.
FIG. 3 is an exemplary block diagram illustrating a plurality of modules comprised in risk analyzer depicted in FIG. 2, to estimate risk for a software application due to quantum threat, according to some embodiments of the present disclosure.
FIG. 4A and FIG. 4B and FIG. 4 is a flow diagram illustrating a method to estimate risk for a software application due to quantum threat, executed using the plurality of modules depicted in FIG. 3, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

It is necessary to assess the risk of a software application with respect to the quantum attacks by analyzing the software application and assigning a risk value. Based on the risk value, the organization takes a call for migrating entire crypto stack from conventional crypto version to post quantum secure version. Existing techniques consider a threat model for the application and essentially does the dynamic analysis of the system. It is challenging to correct the faults if they are identified after the application is implemented and running. Hence, it is necessary to perform static analysis of the application related data using static parameters like its architecture and number of code calls. Thus, embodiments of present disclosure provide a method and system to estimate risk for a software application due to quantum threat. The method receives a set of records pertaining to an enterprise application and parses them to obtain a plurality of parameters including application parameters, crypto parameters and platform parameters. In addition, the method also receives quantum parameters including a list of quantum vulnerable algorithms, a number of Qubits required to break a cryptographic algorithm used by the application and a current Qubit number. Then, value of Quantum Day is determined based on the current Qubit number and the number of Qubits required to break the cryptographic algorithm used by the application. Unlike existing techniques which take the value of Quantum Day directly from websites like NIST, the embodiments of present disclosure dynamically calculates this value, hence it is more realistic. Next, the method calculates a risk value for the application against the quantum threat based on Failure Mode and Effect Analysis (FMEA) technique wherein a severity score ($s\_score$), an occurrence score ($o\_score$) and a detection score ($d\_score$) are calculated for each of the plurality of parameters, Risk Priority Number (RPN) for each parameter is computed by multiplying these scores and finally the RPNs of all the parameters are summed up to estimate overall risk of the application.

The embodiments of present disclosure perform static analysis of the application by considering various application specific parameters, crypto parameters, platform specific parameters and quantum related parameters. Thus, the method analyzes the application at its design phase where faults can be easily corrected. The method is extensible to new set of parameters by defining calculations of $s\_score$, $o\_score$ and $d\_score$, computing RPN based on these scores and simply adding it to the overall risk score. Quantum parameters can be dynamically updated as the quantum computing technology improves.

GLOSSARY:

1. Quantum threat - Asymmetric cryptography, or public-key cryptography, provides confidentiality and integrity for sensitive information. It is used extensively by enterprises (organizations) to secure and protect communications networks, cryptographic keys during their distribution, data at rest, and more. Once developed, quantum computers will be able to use quantum physics to efficiently process information and solve problems that are impractical to solve using current computing technologies. Quantum computers can compromise the algorithms used in asymmetric cryptography. This means that all classified, sensitive, and/or confidential information and communications that were protected using public-key cryptography will be vulnerable to decryption by adversaries or business competitors that have quantum computers. This is referred to as quantum threat in the present disclosure.

2. Migration time: time taken by an enterprise or organization to migrate its software applications containing classical cryptographic algorithms to Post Quantum Cryptography (PQC) based algorithms.

3. Shelf-life time/data shelf life: the number of years that the organization's important, high-value information needs to be protected.

4. Safe time: number of years until application data is safe before the quantum computer breaks the cryptographic algorithm and manipulate the application data.

5. Threat timeline: the number of years before relevant threat actors will be able to break the organization's existing, quantum-vulnerable, cryptography.

6. Inventory: Collection of business data, systems, solutions, products, interfaces, etc. and associated available supporting technical information (e.g. system architectures, designs, protocols, interfaces, cryptographic info, etc.) that are to undergo Quantum Readiness Assessment.

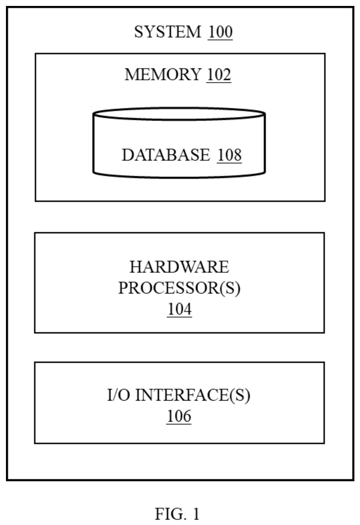

Referring now to the drawings, and more particularly to FIGS. 1 to 4, where similar reference characters denote corresponding features consistently throughout the figures, there are shown preferred embodiments, and these embodiments are described in the context of the following exemplary system and/or method.

FIG. 1 illustrates an exemplary block diagram of a system to estimate risk for a software application due to quantum threat, according to some embodiments of the present disclosure. In an embodiment, the system 100 includes one or more processors 104, communication interface device(s) 106 or Input/Output (I/O) interface(s) 106 or user interface 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

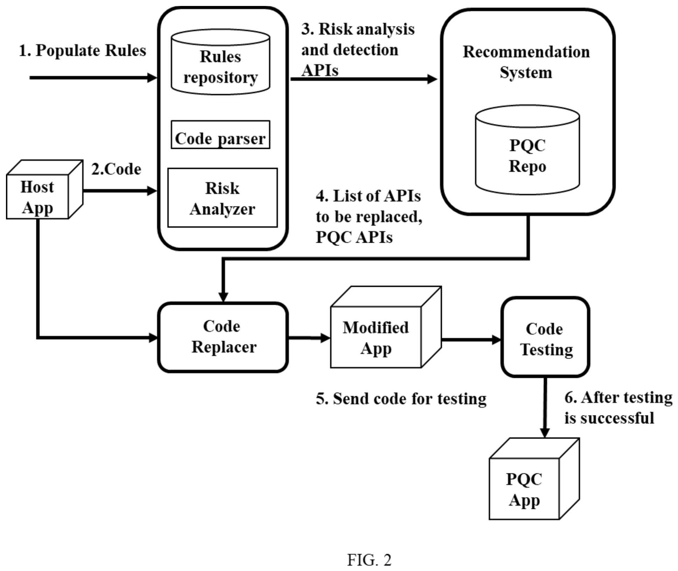

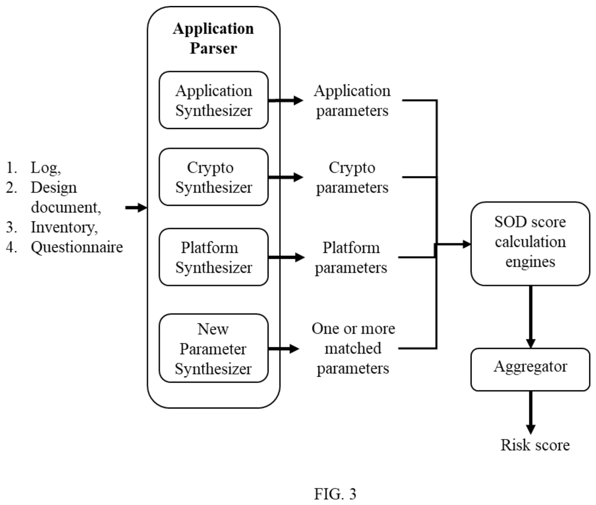

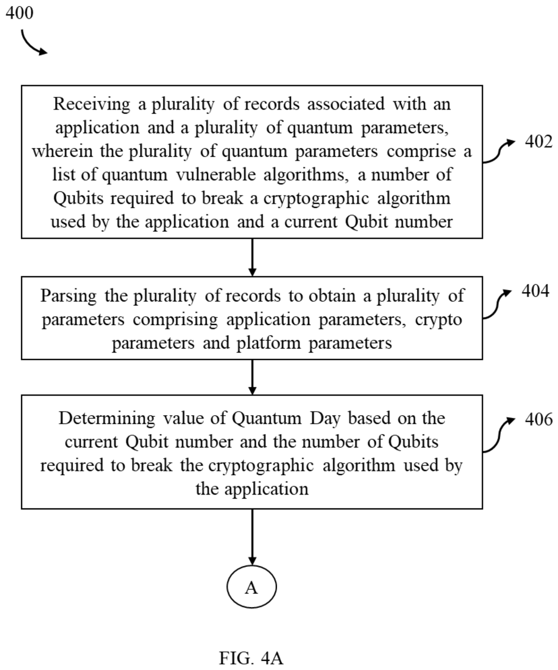

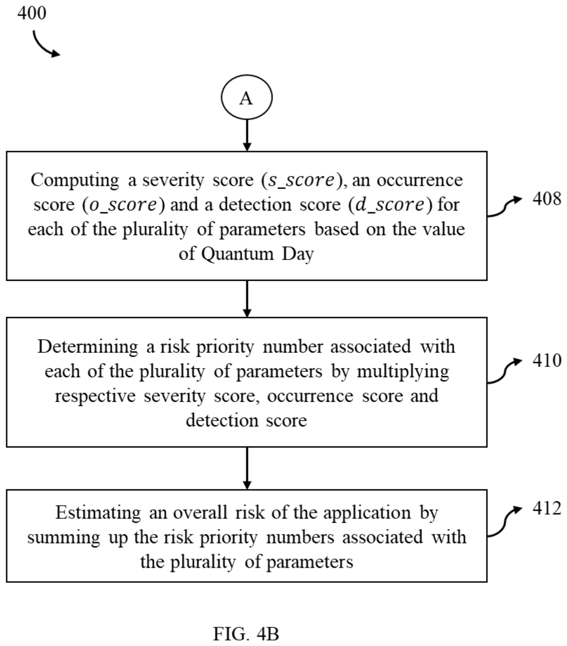

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. The memory 102 may include any computer-readable medium known in the art including, for example, volatile memory, such as Static Random-Access Memory (SRAM) and Dynamic Random-Access Memory (DRAM), and/or non-volatile memory, such as read only memory (ROM), erasable programmable ROM, flash memories, hard disks, optical disks, and magnetic tapes. The database 108 stores information pertaining to inputs fed to the system 100 and/or outputs generated by the system (e.g., at each stage), specific to the methodology described herein. Functions of the components of system 100 are explained in conjunction with pipeline of FIG. 2, block diagram depicted in FIG. 3, and flow diagram of FIG. 4, to estimate risk for a software application due to quantum threat.

In an embodiment, the system 100 comprises one or more data storage devices or the memory 102 operatively coupled to the processor(s) 104 and is configured to store instructions for execution of steps of the method 400 depicted in FIG. 4 by the processor(s) or one or more hardware processors 104. The steps of the method of the present disclosure will now be explained with reference to the components or blocks of the system 100 as depicted in FIG. 1, the pipeline of FIG. 2, the block diagram of FIG. 3 and flow diagram of FIG. 4 to estimate risk for a software application due to quantum threat. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

FIG. 2 is a pipeline for Post Quantum Cryptography (PQC) migration of an application executed by the system of FIG. 1, according to some embodiments of the present disclosure. A software application (alternatively referred to as host application or enterprise application) is given as input to the pipeline. The software application is transformed into PQC secure application by the pipeline. A set of rules for parsing code of the software application are populated in rules repository by a domain expert. Then, a code parser parses the application as per the rules populated in the rules repository to detect crypto related API calls which are output as a list by the code parser. Next, a risk analyzer consumes the API calls list and application meta data to calculate a risk score using method 400 described herein. Based on the risk score, application metadata and the list of API calls, a recommendation system recommends a list of PQC secure APIs to be used for replacing the existing ones in the software application. Based on the recommended list of APIs, a code replacer replaces the crypto APIs detected with the recommended PQC APIs to create a modified application and send it for testing. Finally, the code of the modified application is tested and if testing is successful, PQC secure application is given as output.

FIG. 3 is an exemplary block diagram illustrating a plurality of modules comprised in risk analyzer depicted in FIG. 2, to estimate risk for a software application due to quantum threat, according to some embodiments of the present disclosure. FIG. 3 is explained in conjunction with FIG. 4 which is a flow diagram illustrating a method 400 to estimate risk for a software application due to quantum threat, executed using the plurality of modules depicted in FIG. 3, according to some embodiments of the present disclosure. At step 402 of the method 400, the one or more hardware processors 104 are configured to receive a plurality of records associated with an application and a plurality of quantum parameters. The plurality of quantum parameters include a list of quantum vulnerable algorithms, a number of Qubits required to break a cryptographic algorithm used by the application and a current Qubit number. In an embodiment, the plurality of quantum parameters are fetched from standard websites like NIST (National Institute of Standards and Technology). For example, {RSA (Rivest, Shamir, Adleman), ECDSA (Elliptic Curve Digital Signature Algorithm), EdDSA (Edwards-curve Digital Signature), DSA (Digital Signature Algorithm) and ECDHE (Elliptic Curve Diffie-Hellman Ephemeral)} is a list of quantum vulnerable algorithms. Suppose the software application code has RSA which is broken with 8 million qubits in 3 hours. Then, number of qubits required to break the algorithm is 8 million. Currently the quantum computer has 1180 qubits, and it is expected that a computationally relevant quantum computer will be available by 2030. So, current qubit number is 1180 and Quantum Day is 2030. The plurality of records associated with the application include logs, design document, inventory, and response to a risk questionnaire provided by application owner.

Once the plurality of records and quantum parameters are received, at step 404 of the method 400, the one or more hardware processors 104 are configured to parse the plurality of records to obtain a plurality of parameters comprising application parameters, crypto parameters and platform parameters. The application parameters include application type, application architecture flexibility index, data sensitivity level, migration time, and data shelf life. The application synthesizer illustrated in FIG. 3 parses the plurality of records to obtain the application parameters. It parses the design document using Natural Language Processing (NLP) techniques to look for tokens "App Type" and set the values to the parameters for each variable as per data available. For example, App Type could be web application or standalone application. The application synthesizer parses the inventory to fetch tokens on "Data Sensitivity level, Migration time and Data shelf life" and set the values to the parameters for each variable as per data available. Example values of data sensitivity level are confidential, public, and private. Further, the application synthesizer checks the response to risk questionnaire to determine if the application is open for changes or not. If the application is easy to change then the architecture flexibility flag is set as yes else no.

**[0020]** The crypto parameters include the cryptographic algorithm used by the application, frequency of the cryptographic algorithmic call in the application, key size, and data transfer protocol. The crypto synthesizer illustrated in FIG. 3 parses the plurality of records, particularly the log and inventory, to obtain the crypto parameters. The crypto synthesizer parses the Cryptography Bill of Material (CBoM) (obtained from the inventory) for tokens on the cryptographic algorithm, encryption key size and data transfer protocol and fill the values. Further, the crypto synthesizer searches the algorithm in the log file using crawlers to determine the number of times the algorithm has been called by the application call. This value is considered as an estimate of frequency of the cryptographic algorithmic call in the application over a period of time duration. The platform parameters include third party dependency index, vendor Post Quantum Cryptographic (PQC) compliance index, vendor migration time, and vendor supply time. The platform parameters significantly affect the risk for the application since longer the duration of vendor supply time, longer the migration time will be and hence the higher the risk will be. The platform synthesizer illustrated in FIG. 3 parses the plurality of records to obtain the platform parameters. The platform synthesizer parses the response to risk questionnaire to fetch details on vendor supply time and vendor migration time. Further, the platform synthesizer parses the inventory to check the presence of PQC related APIs in an application and parses the risk questionnaire to check if the third party is quantum safe. If present, then third party dependency index is set as true, else false. Further, the platform synthesizer parses the vendor platform inventory data and questionnaire for PQC libraries. If the PQC libraries are present the Vendor PQC Compliance index is set as yes, else no.

[0021] In an embodiment, suppose a new parameter is discovered which is not part of the plurality of parameters, then, a new parameter synthesizer illustrated in FIG. 3 is used to match the newly discovered parameters to one or more of the existing parameters among the plurality of parameters. The new parameter synthesizer uses NLP based parsing techniques (for example, bottom up parsers) on the data related to the new parameter and look for match with tokens related to parameters of existing synthesizers (including application synthesizer, crypto synthesizer, and platform synthesizer). Once a synthesizer is matched, the new parameter is submitted to that synthesizer. For example, Hardware Security Module (HSM) is a vendor platform which qualifies for Vendor PQC Compliance index. An application that interfaces with HSM can have password stored in certain algorithms, so, the algorithm parameter is considered under Crypto Synthesizer. Thus, the matched parameters output from the new parameter synthesizer are Vendor PQC Compliance index and algorithm.

Once the plurality of parameters are obtained, at step 406 of the method 400, the one or more hardware processors 104 are configured to determine value of Quantum Day based on the current Qubit number and the number of Qubits required to break the cryptographic algorithm used by the application. Unlike existing techniques which take the value of Quantum Day directly from websites like NIST, the embodiments of present disclosure dynamically calculate this value, hence it is more realistic. The Quantum Day calculation is based on Rose law which states that in every 18 months the number of qubit in a quantum chip will be doubled. Considering rate of growth in number of qubits as 2 and using techniques such as geometric progression, the Quantum Day is calculated according to equation 1, where $R_q$ is number of Qubits required to break the cryptographic algorithm used by the application and $Q_c$ is the current Qubit number.

$$Qday = log_2(R_q/Q_c) \ \ldots\ldots\ (1)$$

Further, at step 408 of the method 400, the one or more hardware processors 104 are configured to compute a severity score (*s_score*), an occurrence score (*o_score*) and a detection score (*d_score*) for each of the plurality of parameters. These scores vary in the range of 1 to 10, where value of 1 to 3 is low, 4 to 7 is medium and 8 to 10 is high. Severity score indicates impact on the application (huge impact - high & negligible - low). Occurrence or probability score indicates likelihood of happening or chances to compromise (more likelihood - high and less - low). Detection score indicates capability of detection of attack/failure/compromise (Impossible to detect - high & easy detection - low). In an embodiment, the detection score is often 1.

The step 408 is performed by SOD (Severity, Occurrence, Detection) score calculation engines illustrated in FIG. 3. SOD score for each of the plurality of parameters are calculated by their respective score calculation engine. For example, app engine determines SOD score for application type parameter. The *s_score, o_score* and *d_score* for application type parameter is determined as: i) *s_apptype = high, o_apptype = high* and *d_apptype* = 1, if the application type is web application and ii) *s_apptype = low, o_apptype = low, d_apptype* = 1, if the application type is standalone application. Similarly, Arch flexibility engine computes SOD score for application architecture flexibility index (arch) parameter. The *s_score, o_score* and *d_score* for application architecture flexibility index (arch) is: i) *s_arch = low, o_arch = low, d_arch* = 1, if arch = yes, ii) *s_arch = high, o_arch = high, d_arch* = 1, respectively, if arch = no, and iii) *s_arch = medium, o_arch = medium, d_arch* = 1, respectively, otherwise. The *s_score, o_score* and *d_score* for the cryptographic algorithm is assigned as: i) *s_algo* = 0, *o_algo* = 0, *d_algo* = 1, respectively, if the cryptographic algorithm is not in the list of quantum vulnerable algorithms, ii) *s_algo = high, o_algo = high, d_algo* = 1, respectively, if the cryptographic algorithm is in the list of quantum vulnerable algorithms and the Quantum Day is less than sum of the migration time and the data shelf life, iii) *s_algo = low, o_algo = low, d_algo* = 1, respectively, otherwise.

The *s_score, o_score* and *d_score* for the key size parameter is determined by firstly estimating a time $T_n$ to break the cryptographic algorithm by a quantum computer having number of qubits equal to current Qubit number as $T_n = (R_q/Q_n) * t$, wherein $R_q$ is the number of Qubits required to break the cryptographic algorithm, $Q_n$ is the current Qubit number and $t$ is time taken to break cryptographic algorithm when standard quantum computer with sufficient Qubits are available. Once $T_n$ is estimated, an actual time required for a quantum computer to break the cryptographic algorithm is determined by adding Quantum Day and $T_n$. Next, safe time is obtained by subtracting the migration time from the total time. Finally, values for *s_score, o_score* and *d_score* are assigned based on the safe time and the data shelf life as i) *s_key = high, o_key = high, d_key* = 1, if the safe time is less than the data shelf life, ii) *s_key = medium, o_key = medium, d_key* = 1, if the safe time is equal to data shelf life, and iii) *s_key = low, o_key = low, d_key* = 1, otherwise.

The *s_score*, *o_score* and *d_score* for the data transfer protocol parameter is assigned as: i) *s_transit* = 0, *o_transit* = 0, *d_transit* = 1, if the data transfer protocol is not in the list of quantum vulnerable algorithms, ii) *s_transit = high, o_transit = high, d_transit = 1* if the data transfer protocol is in the list of quantum vulnerable algorithms and the Quantum Day is less than sum of the migration time and the data shelf life, iii) *s_transit = low, o_transit = low, d_transit = 1*, otherwise. The *s_score*, *o_score* and *d_score* for the data sensitivity level parameter is assigned as: i) *s_sens = high, o_sens = high, d_sens = 1* if data sensitivity level is high, ii) *s_sens = medium, o_sens = medium, d_sens = 1* if data sensitivity level is medium, and iii) *s_sens = high, o_sens = high, d_sens = 1*, otherwise. The *s_score*, *o_score* and *d_score* for the third party dependency index parameter is assigned as: i) *s_third* = 0, *o_third* = 0, *d_third* = 1 if the third party dependency index is no (i.e., when no third party libraries are present), ii) otherwise check if crypto is PQC compliant or not, if PQC compliant then *s_third* = 0, *o_third* = 0, *d_third* = 1. The *s_score*, *o_score* and *d_score* for the vendor PQC compliance parameter is determined as: i) *s_vendor* = 0, *o_vendor* = 0, *d_vendor* = 1 if the vendor is PQC compliant (i.e. vendor PQC compliance = 0), ii) *s_vendor = medium, o_vendor = medium, d_vendor* = 1, if the vendor is not PQC compliant and sum of supply time and migration time is less than Quantum Day, and iii) *s_vendor = high, o_vendor = high, d_vendor* = 1, otherwise.

Further, at step 410 of the method 400, the one or more hardware processors 104 are configured to determine a risk priority number associated with each of the plurality of parameters by multiplying respective severity score, occurrence score and detection score according to equation 2.

$$RPN_i = s\_score\_i \times o\_score\_i \times d\_score\_i \ \dots\dots (2)$$

Further, at step 412 of the method 400, the one or more hardware processors 104 are configured to estimate overall risk of the application by summing up the risk priority numbers associated with the plurality of parameters according to equation 3.

$$total \ risk \ = \sum_i RPN_i \ \dots\dots (3)$$

The steps 410 and 412 are performed by aggregator module illustrated in FIG. 3. The method 400 is easily extensible to new set of parameters by defining calculations of s_*score, o_score and d_score,* computing RPN based on these scores and simply adding it to the overall risk score. The risk score of application helps organizations analyze the risk to security of that application due to quantum computers and decide whether to migrate it to post-quantum cryptography or not. Organizations can compute risk score for multiple software applications, sort the risk scores in descending order and come up with a migration plan. Also, the break of the risk score (i.e. SOD score of each parameter) gives visibility on the risk component that should be considered to mitigate the risk in each application.

USE CASE EXAMPLE: Consider a software application appl. The plurality of parameters obtained by parsing records related to the software application are given in table 1. The quantum parameters are listed in table 2.

Table 1

| Parameter | Value |
|---|---|
| App_type | web |
| Algo | RSA, ECDHE, ECDSA |
| Key size | 1024 |
| Data Sensitivity | High |
| Arch Flexibility | Yes |
| Third Party (Q safe used) | Yes |
| is third party quantum safe? | No |
| Data Transfer protocol | RSA |
| Data shelf life (in years) | 12 |
| Migration time (in years) | 2 |
| Vendor PQC compliance index | Yes |
| Vendor supply time (in years) | 5 |
| Frequency of the cryptographic algorithmic call in the application | 10000 |

Table 2

| Algorithm Name | Key Size | $R_q$ | time | Quantum Day | Current day | $Q_n$ |
|---|---|---|---|---|---|---|
| RSA | 1024 | 8050000 | 3.58 | 2030 | 2024 | 1180 |
| | 2048 | 8560000 | 28.63 | | | |
| | 4096 | 11200000 | 229 | | | |

The SOD scores and RPN values calculated using method 400 for the algorithm is illustrated in table 3.

Table 3

| Sl. No. | Algorithm | *s_algo* | *o_algo* | *d_algo* | RPN |
|---|---|---|---|---|---|
| 1. | RSA | 10 | 10 | 1 | 100 |
| 2. | RSA | 10 | 10 | 1 | 100 |
| 3. | ECDHE | 10 | 30 | 1 | 300 |
| 4. | ECDSA | 10 | 10 | 1 | 100 |
| | Total RPN for algorithm (*RPN_algo*) | | | | 600 |

The RPN values calculated using method 400 for the remaining parameters is given in table 4. Once RPN values for individual parameters is computed, total risk score for the application is determined by summing up all the RPN values. Hence, for this example, the total risk score is 1025.

Table 4

| Sl. No. | Parameter | *s_score* | *o_score* | *d_score* | RPN |
|---|---|---|---|---|---|
| 1. | App type | 10 | 10 | 1 | 100 |
| 2. | Algo | - | - | - | 600 |
| 3. | Key size | 10 | 10 | 1 | 100 |
| 4. | Data sensitivity level | 10 | 10 | 1 | 100 |
| 5. | Arch flexibility index | 5 | 5 | 1 | 25 |
| 6. | Third party | 0 | 0 | 1 | 0 |
| 7. | Data transfer protocol | 10 | 10 | 1 | 100 |
| 8. | Vendor | 0 | 0 | 1 | 0 |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, non-volatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (400) comprising:

   receiving (402), via one or more hardware processors, a plurality of records associated with an application and a plurality of quantum parameters, wherein the plurality of quantum parameters comprise a list of quantum vulnerable algorithms, a number of Qubits required to break a cryptographic algorithm used by the application and a current Qubit number;
   parsing (404), via the one or more hardware processors, the plurality of records to obtain a plurality of parameters comprising application parameters, crypto parameters and platform parameters;
   determining (406), via the one or more hardware processors, value of Quantum Day based on the current Qubit number and the number of Qubits required to break the cryptographic algorithm used by the application;
   computing (408), via the one or more hardware processors, a severity score ($s\_score$), an occurrence score ($o\_score$) and a detection score ($d\_score$) for each of the plurality of parameters based on the value of Quantum Day;
   determining (410), via the one or more hardware processors, a risk priority number associated with each of the plurality of parameters by multiplying respective severity score, occurrence score and detection score; and
   estimating (412), via the one or more hardware processors, an overall risk of the application by summing up the risk priority numbers associated with the plurality of parameters.

2. The processor implemented method as claimed in claim 1, wherein the plurality of records associated with the application include logs, design document, inventory, and response to a risk questionnaire.

3. The processor implemented method as claimed in claim 1, wherein the application parameters include application type, application architecture flexibility index, data sensitivity level, migration time, and data shelf life, wherein the crypto parameters include the cryptographic algorithm used by the application, frequency of the cryptographic algorithmic call in the application, key size, and data transfer protocol, and wherein the platform parameters include third party dependency index, vendor Post Quantum Cryptographic (PQC) compliance index, vendor migration time, and vendor supply time.

4. The processor implemented method as claimed in claim 3, wherein the *s_score, o_score* and *d_score* for the application type are: i) high, high and 1, respectively if the application type is web application and ii) low, low, 1, respectively, if the application type is standalone application, and wherein the *s_score, o_score* and *d_score* for the application architecture flexibility index (arch) are: i) low, low, 1, respectively, if arch = yes, ii) high, high, 1, respectively, if arch = no, and iii) medium, medium, 1, respectively, otherwise.

5. The processor implemented method as claimed in claim 3, wherein the *s_score, o_score* and *d_score* for the cryptographic algorithm are: i) 0, 0, 1, respectively, if the cryptographic algorithm is not in the list of quantum vulnerable algorithms, ii) high, high, 1, respectively, if the cryptographic algorithm is in the list of quantum vulnerable algorithms and the Quantum Day is less than sum of the migration time and the data shelf life, and iii) low, low, 1, respectively, otherwise.

6. The processor implemented method as claimed in claim 3, wherein the *s_score, o_score* and *d_score* for the key size parameter is determined by:

  estimating a time $T_n$ to break the cryptographic algorithm by a quantum computer having number of qubits equal to current Qubit number as $T_n = (R_q/Q_n) * t$, wherein $R_q$ is the number of Qubits required to break the cryptographic algorithm, $Q_n$ is the current Qubit number and $t$ is time taken to break cryptographic algorithm when standard quantum computer with sufficient Qubits are available;
  determining an actual time required for a quantum computer to break the cryptographic algorithm by adding Quantum Day and $T_n$;
  obtaining a safe time by subtracting the migration time from the actual time, wherein the safe time is number of years until application data is safe before the quantum computer breaks the cryptographic algorithm and manipulate the application data; and
  assigning values for the *s_score, o_score* and *d_score* based on the safe time and the data shelf life as i) high, high, 1, respectively, if the safe time is less than the data shelf life, ii) medium, medium, 1, respectively, if the safe time is equal to the data shelf life, and iii) low, low, 1, respectively, otherwise.

7. The processor implemented method as claimed in claim 3, wherein the *s_score, o_score* and *d_score* for the data transfer protocol are: i) 0, 0, 1, respectively, if the data transfer protocol is not in the list of quantum vulnerable algorithms, ii) high, high, 1 if the data transfer protocol is in the list of quantum vulnerable algorithms and the Quantum Day is less than sum of the migration time and the data shelf life, and iii) low, low, 1, respectively, otherwise.

8. A system (100), comprising:

  a memory (102) storing instructions;
  one or more Input/Output (I/O) interfaces (106); and

    one or more hardware processors (104) coupled to the memory (102) via the one or more communication interfaces (106), wherein the one or more hardware processors (104) are configured by the instructions to: receive a plurality of records associated with an application and a plurality of quantum parameters, wherein the plurality of quantum parameters comprise a list of quantum vulnerable algorithms, a number of Qubits required to break a cryptographic algorithm used by the application and a current Qubit number;
    parse the plurality of records to obtain a plurality of parameters comprising application parameters, crypto parameters and platform parameters;
    determine value of Quantum Day based on the current Qubit number and the number of Qubits required to break the cryptographic algorithm used by the application;
    compute a severity score (*s_score*), an occurrence score (*o_score*) and a detection score (*d_score*) for each of the plurality of parameters based on the value of Quantum Day;
    determine a risk priority number associated with each of the plurality of parameters by multiplying respective severity score, occurrence score and detection score; and
    estimate an overall risk of the application by summing up the risk priority numbers associated with the plurality of parameters.

9. The system as claimed in claim 8, wherein the plurality of records associated with the application include logs, design document, inventory, and response to a risk questionnaire.

10. The system as claimed in claim 8, wherein the application parameters include application type, application architecture flexibility index, data sensitivity level, migration time, and data shelf life, wherein the crypto parameters include the cryptographic algorithm used by the application, frequency of the cryptographic algorithmic call in the application, key size, and data transfer protocol, and wherein the platform parameters include third party dependency index, vendor Post Quantum Cryptographic (PQC) compliance index, vendor migration time and vendor supply time.

11. The system as claimed in claim 10, wherein the *s_score, o_score* and *d_score* for the application type are: i) high, high and 1, respectively if the application type is web application and ii) low, low, 1, respectively, if the application type is standalone application, and wherein the *s_score, o_score* and *d_score* for the application architecture flexibility index (arch) are: i) low, low, 1, respectively, if arch = yes, ii) high, high, 1, respectively, if arch = no, and iii) medium, medium, 1, respectively, otherwise.

12. The system as claimed in claim 10, wherein the *s_score, o_score* and *d_score* for the cryptographic algorithm are: i) 0, 0, 1, respectively, if the cryptographic algorithm is not in the list of quantum vulnerable algorithms, ii) high, high, 1, respectively, if the cryptographic algorithm is in the list of quantum vulnerable algorithms and the Quantum Day is less than sum of the migration time and the data shelf life, and iii) low, low, 1, respectively, otherwise.

13. The system as claimed in claim 10, wherein the *s_score, o_score* and *d_score* for the key size parameter is determined by:

   estimating a time $T_n$ to break the cryptographic algorithm by a quantum computer having number of qubits equal to current Qubit number as $T_n = (R_q/Q_n) * t$, wherein $R_q$ is the number of Qubits required to break the cryptographic algorithm, $Q_n$ is the current Qubit number and $t$ is time taken to break cryptographic algorithm when standard quantum computer with sufficient Qubits are available;
   determining an actual time required for a quantum computer to break the cryptographic algorithm by adding Quantum Day and $T_n$;
   obtaining a safe time by subtracting the migration time from the actual time, wherein the safe time is number of years until application data is safe before the quantum computer breaks the cryptographic algorithm and manipulate the application data; and
   assigning values for the *s_score, o_score* and *d_score* based on the safe time and the data shelf life as i) high, high, 1, respectively, if the safe time is less than the data shelf life, ii) medium, medium, 1, respectively, if the safe time is equal to the data shelf life, and iii) low, low, 1, respectively, otherwise.

14. The system as claimed in claim 10, wherein the *s_score*, *o_score* and *d_score* for the data transfer protocol are: i) 0, 0, 1, respectively, if the data transfer protocol is not in the list of quantum vulnerable algorithms, ii) high, high, 1 if the data transfer protocol is in the list of quantum vulnerable algorithms and the Quantum Day is less than sum of the migration time and the data shelf life, and iii) low, low, 1, respectively, otherwise.

15. One or more non-transitory machine-readable information storage mediums comprising one or more instructions which when executed by one or more hardware processors cause:

   receiving a plurality of records associated with an application and a plurality of quantum parameters, wherein the plurality of quantum parameters comprise a list of quantum vulnerable algorithms, a number of Qubits required to break a cryptographic algorithm used by the application and a current Qubit number;
   parsing the plurality of records to obtain a plurality of parameters comprising application parameters, crypto parameters and platform parameters;
   determining value of Quantum Day based on the current Qubit number and the number of Qubits required to break the cryptographic algorithm used by the application;
   computing a severity score (*s_score*), an occurrence score (*o_score*) and a detection score (*d_score*) for each of the plurality of parameters based on the value of Quantum Day;
   determining a risk priority number associated with each of the plurality of parameters by multiplying respective severity score, occurrence score and detection score; and
   estimating an overall risk of the application by summing up the risk priority numbers associated with the plurality of parameters.

SYSTEM 100

MEMORY 102

DATABASE 108

HARDWARE PROCESSOR(S) 104

I/O INTERFACE(S) 106

FIG. 1

1. Populate Rules

Rules repository

Code parser

Risk Analyzer

Host App

2. Code

3. Risk analysis and detection APIs

Recommendation System

PQC Repo

4. List of APIs to be replaced, PQC APIs

Code Replacer

Modified App

Code Testing

5. Send code for testing

6. After testing is successful

PQC App

FIG. 2

FIG. 3

400

Receiving a plurality of records associated with an application and a plurality of quantum parameters, wherein the plurality of quantum parameters comprise a list of quantum vulnerable algorithms, a number of Qubits required to break a cryptographic algorithm used by the application and a current Qubit number — 402

Parsing the plurality of records to obtain a plurality of parameters comprising application parameters, crypto parameters and platform parameters — 404

Determining value of Quantum Day based on the current Qubit number and the number of Qubits required to break the cryptographic algorithm used by the application — 406

A

FIG. 4A

400

A

Computing a severity score ($s\_score$), an occurrence score ($o\_score$) and a detection score ($d\_score$) for each of the plurality of parameters based on the value of Quantum Day — 408

Determining a risk priority number associated with each of the plurality of parameters by multiplying respective severity score, occurrence score and detection score — 410

Estimating an overall risk of the application by summing up the risk priority numbers associated with the plurality of parameters — 412

FIG. 4B

Europäisches
Patentamt

European
Patent Office

Office européen
des brevets

# EUROPEAN SEARCH REPORT

**Application Number**

EP 25 22 0766

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2024/119359 A1 (ARBAJIAN PIERRE [US] ET AL) 11 April 2024 (2024-04-11) * paragraph [0199] - paragraph [0263] * ----- | 1-15 | INV. H04L9/00 G06F21/57 G06N10/60 |
| A | YASER BASERI ET AL: "Evaluation Framework for Quantum Security Risk Assessment: A Comprehensive Study for Quantum-Safe Migration", ARXIV.ORG CORNELL UNIVERSITY LIBRARY, 201 OLIN LIBRARY CORNELL UNIVERSITY ITHACA, NY 14853, 12 April 2024 (2024-04-12), XP091726789, DOI: 10.2139/SSRN.4750609 * the whole document * ----- | 1-15 | |
| A | Amadori Alessandro ET AL: "The PQC Migration Handbook", , 31 December 2024 (2024-12-31), XP093374369, Retrieved from the Internet: URL:https://publications.tno.nl/publicatio n/34643386/fXcPVHsX/TNO-2024-pqc-en.pdf * page 28 - page 52 * ----- | 1-15 | |

**TECHNICAL FIELDS SEARCHED (IPC)**

H04L
G06F
G06E
G06N

The present search report has been drawn up for all claims

| Place of search | Date of completion of the search | Examiner |
|---|---|---|
| Munich | 15 May 2026 | Apostolescu, Radu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 0766

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2026

| Patent document cited in search report | Publication date | Patent family member(s) | Publication date |
|---|---|---|---|
| US 2024119359 A1 | 11-04-2024 | US 11449799 B1 | 20-09-2022 |
| | | US 11727310 B1 | 15-08-2023 |
| | | US 2024119359 A1 | 11-04-2024 |

EPO FORM P0459

For more details about this annex : see Official Journal of the European Patent Office, No. 12/82

**REFERENCES CITED IN THE DESCRIPTION**

**Patent documents cited in the description**

- IN 202521000475

- IN 202321067239